# EUROPEAN PATENT SPECIFICATION

(11) **EP 3 905 157 B1**
(45) Date of publication and mention of the grant of the patent: **02.09.2026**
(21) Application number: 21170022.4
(22) Date of filing: 22.04.2021
(51) Int. Cl.: G06Q 10/06, G06Q 10/10, G06Q 10/00, G06Q 10/0639, G06Q 10/20

(54) **SMART BUILDING SCORE INTERFACE**
INTELLIGENTE GEBÄUDEBEWERTUNGSSCHNITTSTELLE
INTERFACE DE SCORE DE BÂTIMENT INTELLIGENT

(30) Priority: 30.04.2020 US 202016863266
(43) Date of publication of application: 03.11.2021
(73) Proprietor: HONEYWELL INTERNATIONAL INC., Charlotte, NC 28202 (US)
(72) Inventor: WINTER, Nicola Scarlett, Charlotte, 28202 (US); BREIER, Eric Wayne, Charlotte, 28202 (US)
(74) Representative: Black, Diego

(56) References cited:
- WO-A1-2010/129913

## Description

### Background

The present disclosure pertains to monitoring real estate, for example, particularly to buildings.

WO 2010/129913 A1 describes an energy analysis system which assists with obtaining a detailed view of how energy consumption occurs in a building, what steps may be taken to lower the energy footprint, and executing detailed energy consumption analyses.

### Summary

The disclosure reveals a system and approach for observing how smart an enterprise is performing comparatively across a relevant industry. It may be model based, using dynamic data to observe the performance of the enterprise, such as one or more buildings. The system and approach may use a smart building score in view of metrics based off of comprehensive pillars or categories, including, for example, those of people, process, assets, environment and connectivity. An overall smart building score may be developed from the smart building scores of the categories. The scores may be observed on a dashboard. Changes in the scores may reveal variations of the enterprise in a real time manner.

### Brief Description of the Drawing

Figure 1 is a diagram of an arrangement that is used for implementing a smart building score system;
Figure 2 is a diagram of a screen shot of a dashboard showing a smart building score for a portfolio;
Figure 3 is a diagram of a graph of a plot of utility consumption;
Figure 4 is a diagram of a graph of water consumption use and budget;
Figure 5 is a diagram of a dashboard like that of dashboard in Figure 2 with a smart building score provided to a tenth of one percent resolution; and
Figure 6 is a diagram of a portfolio summary dashboard having categories of financials, comfort performance, space utilization, energy consumption and asset performance.

### Description

The present system and approach may incorporate one or more processors, computers, controllers, user interfaces, wireless and/or wire connections, and/or the like, in an implementation described and/or shown herein.

This description may provide one or more illustrative and specific examples or ways of implementing the present system and approach. There may be numerous other examples or ways of implementing the system and approach.

The present disclosure may be used for an enterprise commercial real estate organizations, specifically for portfolio managers, to help them get a quick at-a-glance indication of how smart their entire system is performing.

Buildings may be traditionally isolated environments, with very little knowledge of industry performance outside their own purview. The smart building score may normalize common data points to provide insights into not just how the pertinent building is performing, but how it compares across the industry. This may give customers a unique understanding into how to improve their key performance indicators across their entire portfolio, and what standard is needed to outstrip their competitors.

To note the differences between relevant approaches, some approaches may relate to the content and algorithms of the smart building score (SBS), in how numbers are calculated and what the various categories are. The present approach may reference behaviours and workflows of the software and how a customer will interact with the smart building score, as well as the visual elements on the screen.

The approach may be unique as it not only collates all the data available for a building into a single overall measurable score, but then compares this score across the industry to determine an accurate and in-depth view of its relative performance. It may be a key feature in a connected enterprise (CE) offering, and be highly desirable in the market. It may provide customers with exclusive and powerful data to improve their buildings, thus resulting in high cost savings and an improved market share. This approach appears to be an answer to unmet industry needs and market demands.

With the dashboards developed, customers may be able to visit them through a connected buildings platform to track their performance across the key indicators. The ring, circle or donut symbols may indicate the buildings' current status, with the triangles in the symbols showing whether their performance has improved or decreased, and revealing to the users where they need to improve. Every score may fall into one or more categories, such as, for example, environment, people, process, connectivity and assets, which is a way that the users see how their score compares across the pertinent industry. This approach of classification may carry across every level of the smart building score, from the main overall score to individual metrics. The users may view this information for a single site, or for their entire portfolio.

The present approach and system may generate or capture data. It may have a software stack level of a cloud that may be secure, scalable infrastructure for collecting, aggregating and storing data, allowing connected "things" to communicate, offering available SaaS solutions, IaaS/PaaS, and data lakes. There may be a software type connectivity offering available through a cloud or direct remote connection (SaaS), or that covers infrastructure enabling connected services (sentience). There may be IoT of a stack level in the cloud with a secure, scalable infrastructure for collecting, aggregating and storing data, allowing connected "things" to communicate, and offering SaaS solutions available with IaaS/PaaS, data lakes.

A unique and objective feature of the present system may be the way that it completely changes how a user solves problems in regards to its buildings. A user may have to had manually find information and navigate multiple dashboards and datasets in order to diagnose problems. The smart building score is a high level layer that sits on top of all this data. This not only may give the user an easily accessible, single view of how their buildings are performing, but the system may actually find issues and present these to the user, thus eliminating the need for manual effort. This may be first done through the smart building score, which can be presented inside a circle, pie or donut symbol, or a like chart at the top of the dashboard, screen or page.

There may be an overall score, and then a score for each pillar or category, which via a number and associated scorecard range can tell the user where the problem or problems are and where to focus. Once the user has selected the problem area, the interface may then provide virtually all additional contextual information needed to properly diagnose the problem, without the user needing to change screens or dashboards. This may be demonstrated by a workflow noted herein. The additional information may include a trend view over time of the score itself, a trend view over time of the relevant consumption, or financial data and other areas, system generated recommendations, alerts, and service cases, whether the user is under or above target, and more indications. The user may also chose to approach a problem from the perspective of a single building at a site, and see the information in relation to that site, or from a score perspective, and, for example, see virtually all the information for an environment pillar for all buildings (at the sites). The smart building score interface may allow the user to see the big picture of how the portfolio is performing, and may direct the user to the issues and give it the necessary information and steps to solve those issues without having to change screens or dashboards. The system may remove all previous manual inputs, and ensure that the process can be exponentially more efficient, accurate and faster.

The pillars or categories may be displayed herein in various kinds and forms of visual presentations. The presentations noted herein are illustrative examples.

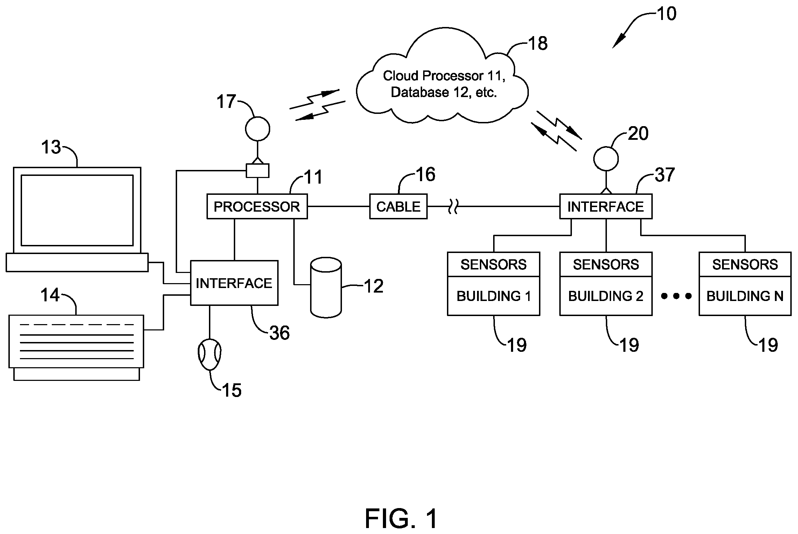

Figure 1 is a diagram of an arrangement 10 that is used for implementing a smart building score system. A processor 11 on the premises or at a cloud 18 may provide operation of the smart building score system. A database 12 on the premises or at cloud 18 may be connected to processor 11, at cloud 18 or on the premises, for memory needs such as functions, such as those of a scorecard, related to the smart building score system. A monitor 13, keyboard 14 and a mouse 15 may be connected to an interface 36. Interface 36 may be connected to processor 11 or to antenna 17. Processor 11 may be connected to a cable 16 for internet, and other net or like components in a wire or wireless fashion. Processor 11 may be connected via an antenna 17 to cloud 18. Sensors of one or more buildings19 (e.g., 1, 2 ..., N) may be connected to an interface 37 for connection to a processor 11 via cable 16 or antenna 20.

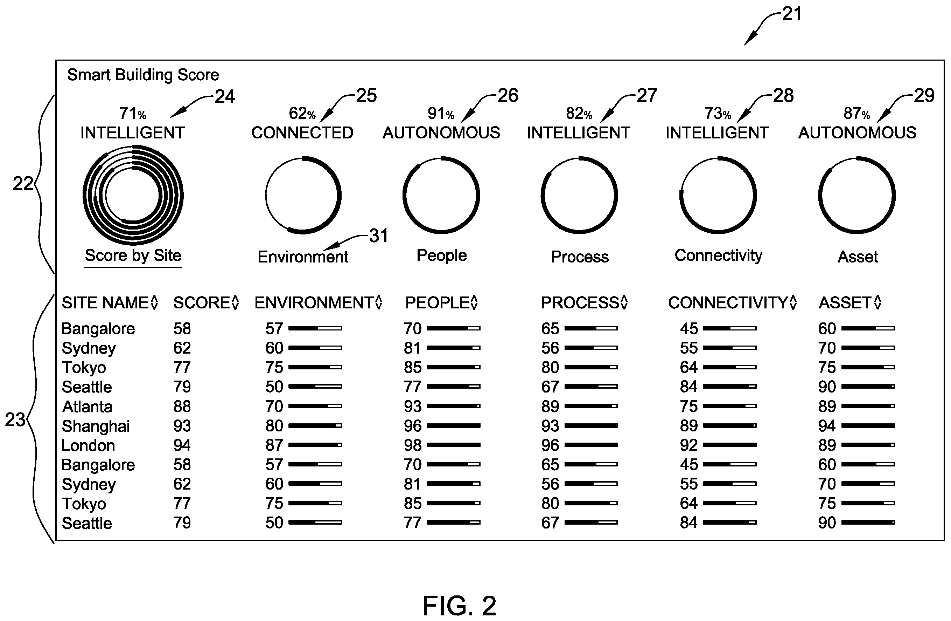

A one may start by viewing a smart building score 24 for a portfolio in a dashboard 21 of Figure 2, a score for each of a number of pillars, a score for each site, and a score for each pillar in the a site. Example pillars in row 22 may include, but not be limited to, environment 25, people 26, process 27, connectivity 28, and assets 29. Dashboard 21 may be displayed on monitor 13 of Figure 1. Example sites may include, but not limited to, Bangalore, Sydney, Tokyo, Seattle, Atlanta, Shanghai, and London, as shown in rows 23. From here, one may select a specific site to see details of that site's smart building score, and/or one may use the tabs to see the details of each pillar in terms of individual scores and other information.

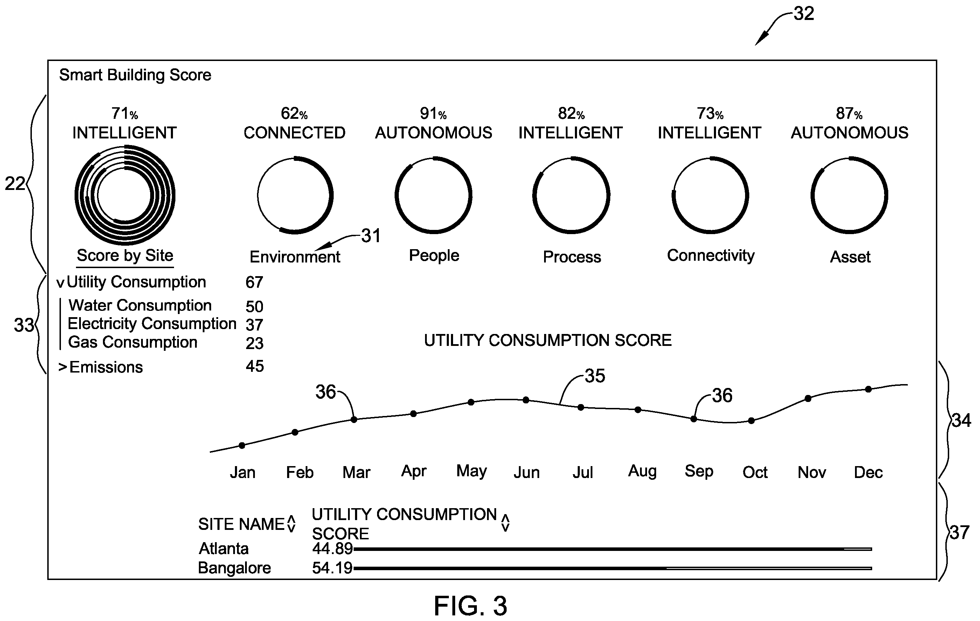

For instance, one may select an environmental tab 31 in Figure 2. This selection may bring up available categories for environment in the left rail 33 of the dashboard 32 in Figure 3. For example, these categories may include, but are not limited to, utility consumption, emissions, and so on, which can expand the selection to show the subcategories. The subcategories may include, but are not limited to, water consumption, electricity consumption, gas consumption, and the like, with scores 50, 37 and 23, respectively. The environmental tab selection may also populate the right content area 34 with further details for utility consumption, such as a score trend of the utility consumption score indicated over time with, for instance, a line 35 and monthly marks 36 over a year. Other graphic marks and time lines may be used to indicate a score trend. Also, a utility consumption score may be listed for each site in Figure 3, as indicated by row 37.

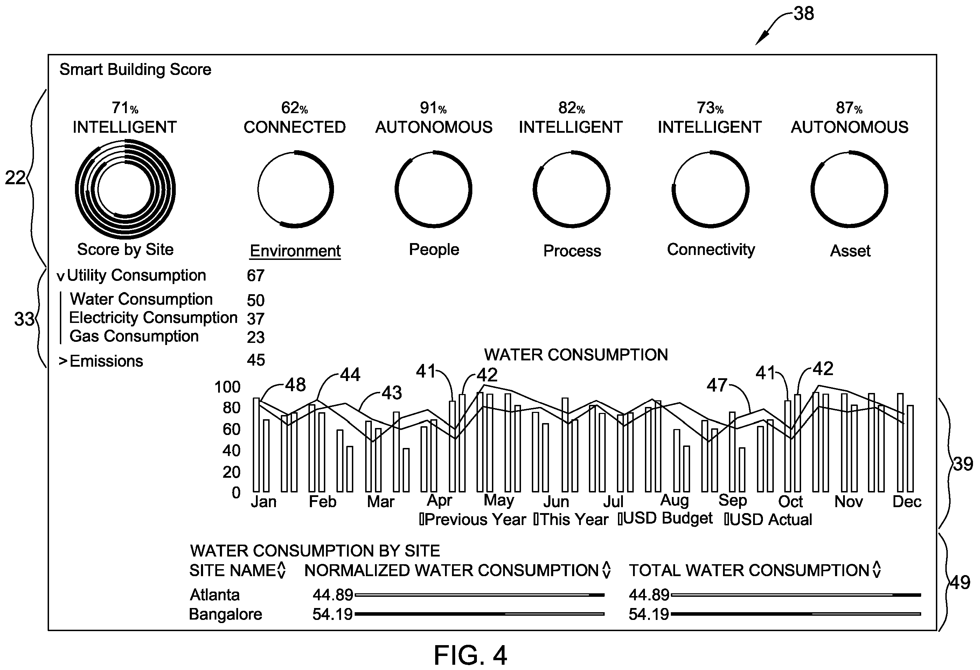

For illustrative purposes, one may select the water consumption subcategory. This selection may change the information available in the right content area to be specifically around water consumption by a dashboard 38, as shown in Figure 4. The content area 39 may include a graph of pairs of vertical bars 41 and 42, each pair indicating consumption of every two weeks over a period of a year. The first bar 41 of each pair may indicate water consumption for the same two week period of the previous year and the second bar 42 may indicate water consumption for the same two week period of the present year.

A first trend line 43 may connect a set of dots 44, each dot 44 may also be located among each pair of the vertical bars 41 and 42. The first dot 44 for this trend line 43 at the first part of January may be located vertically below another dot 48, and the dots 44 at each pair of bars 41 and 42, may be connected by lines to form the first trend line 43 that indicates a budget for water consumption. The magnitude units on the graph may be in terms of currency units, such as U.S. dollars.

A second trend line 47 may connect a set of dots 48, each dot 48 may also be also located among each pair of bars 41 and 42. The first dot 48 for this trend line 47 at the first part of January may be located vertically above another dot 44, and the dots 48 at each pair of bars 41 and 42, may be connected by lines to form second trend line 47 that indicates actual water consumption. Different graph symbols may be used. Other graphic marks and time lines may be used to indicate a score trend.

Also, the graph for the subcategory of water consumption may be shown according to site at the bottom area at row 49 of Figure 4. A first measurement may indicate normalized water consumption. Second measurement may be total water consumption for the same site.

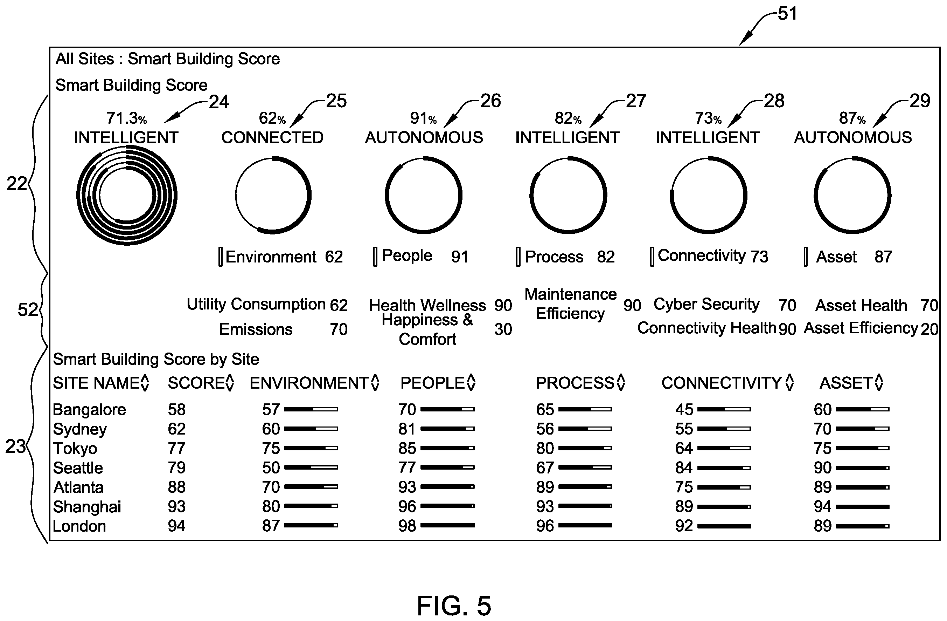

Figure 5 is a diagram of a dashboard 51 like that of dashboard 21 in Figure 2. Row 22 may reveal scores for pillars or categories 25, 26, 27, 28 and 29. An overall smart building score for all sites may be indicated by symbol 24 to a tenth of a percent such as for instance, as "71.3%". This score may be an illustrative example of dashboard 51.

Row 23 may indicate smart building scores by site. Also, for each site there may be pillar or category scores for environment, people, process, connectivity and assets.

Row 52 reveals a breakdown of categories or pillars 24-29 with their own respective scores for categories. Environment 25 may have scores for utility consumption and emissions. People 26 may have scores for health wellness, and happiness and comfort. Process 27 may have a score for maintenance efficiency. Connectivity 28 may have scores for cyber security and connectivity health. Assets 29 may have scores for asset health and asset efficiency.

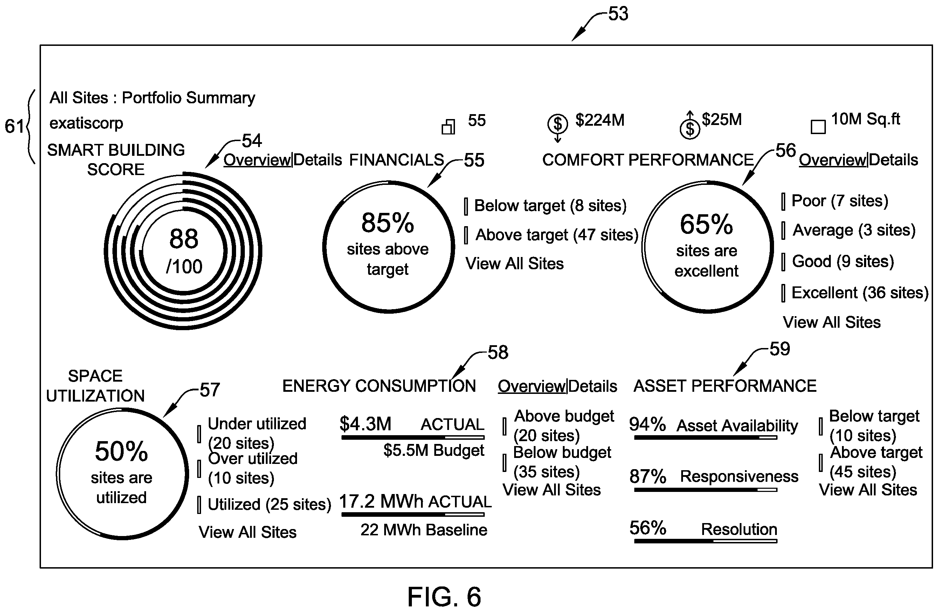

Figure 6 is a diagram of a portfolio summary dashboard 53 for revealing a portfolio summary for all sites. Pillars or categories of interest may include financials 55, comfort performance 56, space utilization 57, energy consumption 58 and asset performance 59. A smart building score 54 may be effective as an overview and compilation of the pillars or categories 55, 56, 57, 58 and 59.

Symbol 54 represents an overview smart building score. A top row 61 shows a portfolio cost of $224M, portfolio savings of $25M and a total footprint of 10M sq. ft. in the overview. Financials 55 may be represented with a circle, pie or donut graph revealing 85% sites above target. Comfort 56 may be represented with a circle, pie or donut graph ranking the sites with about 65% as excellent, 13% as poor, 6% as average, and 16% as good. Space utilization may be represented with a circle, pie or donut graph ranking the sites with about 50% of the sites properly utilized and the remaining sites as under and/or over utilized.

Energy consumption 58 may be represented with bar graphs. The actuals may be shown as $4.3M and the budget as $5.5M. 20 sites are shown as above budget and 35 sites as below budget. Consumption 58 may also be shown in terms of 17.2 MWh actuals and 22 MWh as a baseline.

Asset performance 59 may be represented in terms of bar graphs. 94% may reveal asset availability, 87% responsiveness, and 56% resolution in terms of performance. 45 sites may be regarded as above target and 10 sites regarded as below target.

Other various graphical symbols may be used to indicate parameters and values.

To recap, a user interface system for a smart building score evaluation of one or more buildings, may incorporate one or more sensors situated at each building of one or more buildings, that provide dynamic data about the one or more buildings, a processor and database for receiving and processing the dynamic data, and having a program that implements tabulating the dynamic data for one or more categories of the one or more buildings, and a monitor connected to the processor. The tabulating may determine score points for each of the dynamic data and calculate a smart building score for each of the one or more categories, and calculate an overall smart building score based on a smart building score for each of the one or more categories according to a predetermined function for the one or more buildings. The smart building score for each of the one or more categories and the overall smart building score may be displayed on a dashboard.

The predetermined function for calculating the smart building score, may assign a coefficient factor to each of the one or more categories. The coefficient factor may be determined from a comparison value with an industry average applied to each smart building score of the one or more categories.

The dashboard may be shown on the monitor.

The monitor may allow one to see a full view of the overall smart building score and the system, and yet obtain and see details of the dynamic data for detecting and solving issues without changing the dashboard or the monitor

The one or more categories may be selected from a group comprising people, assets, process, environment and connectivity.

The smart building score for each of the one or more categories may be classified according to geographic region. The overall smart building score may be classified according geographic region.

The system may further comprise a look-up table of smart building scores, which can provide a smart building classification of value according to a smart building score.

The processor and the database may be situated in a cloud.

The dynamic data may be real time data.

An approach for developing a smart building score interface, may incorporate calculating one or more scores for one or more pillars from a database having data from one or more sites of buildings, and associating each score of the one or more scores for the one or more pillars, with one or more symbols on a dashboard. The scores may be factored with a predetermined formula and combined into an overall smart building score.

The one or more pillars may selected from a group consisting of environment, people, process, connectivity and assets.

The approach may further incorporate activating a tab at a symbol on the dashboard associated with a pillar of the one or more pillars, to obtain at least a partial basis from which the pillar is derived.

A score for environment may be derived from utility consumption and emissions. A score for people may be derived from health, wellness, happiness and comfort. A score for connectivity may be derived from cyber security and connectivity health. A score for process may be derived from maintenance efficiency. A score for assets may be derived from asset health and asset efficiency.

An approach for developing a user interface of a smart building score, may incorporate a smart building score by site for one or more sites. Each smart building score by site may be derived from one or more scores from a group consisting of an environment score, a people score, a process score, a connectivity score and an asset score, for the respective site.

The one or more sites may be labeled according to a name of a metropolitan vicinity where the one or more buildings are situated.

The approach may further incorporate a dashboard that displays the environmental score, the people score, the connectivity score, the process score or the asset score in multi-place digits with score labels at the scores to identify each score. Each of the scores may be situated at a geometrical symbol on the dashboard. A portion of the geometrical symbol may have a contrast different from a remaining portion of the geometrical symbol, in which the score is represented on a percentage scale, and the amount of contrast difference represents a certain portion of the scale as the displayed value between full and no contrast where a symbol of full contrast represents one hundred percent and a symbol of no contrast represents zero percent.

Each geometrical symbol with a contrast may have a color that is different than the colors of the other geometrical symbols with different contrasts. A copy of each geometrical symbol with its contrast may be placed at an unoccupied space on the dashboard in a concentric fashion as grouped geometrical symbols but fitted without any geometrical symbol overlapping or covering another geometrical symbol.

An overall smart building score for all sites may be displayed within the grouped geometrical symbols.

A sub symbol may be displayed at each geometrical symbol to indicate a direction and magnitude of a last change in the score at the respective each geometrical symbol.

A user may monitor, evaluate or compare performance of a site or pillar relative to a counterpart across industry.

**In** the present specification, some of the matter may be of a hypothetical or prophetic nature although stated in another manner or tense.

Although the present system and/or approach has been described with respect to at least one illustrative example, many variations and modifications will become apparent to those skilled in the art upon reading the specification. It is therefore the intention that the appended claims be interpreted as broadly as possible in view of the related art to include all such variations and modifications.

## Claims

1. A user interface system for a smart building score evaluation of one or more buildings, comprising:
one or more sensors situated at each building of one or more buildings, that provide dynamic data about the one or more buildings;
a processor and database for receiving and processing the dynamic data, and having a program that implements tabulating the dynamic data for one or more categories of the one or more buildings; and
a monitor connected to the processor; and
wherein:
the tabulating determines score points for each of the dynamic data and calculates a smart building score for each of the one or more categories, and calculates an overall smart building score based on a smart building score for each of the one or more categories according to a predetermined function for the one or more buildings,
wherein the one or more categories include one or more of utility consumption, emissions, cyber security, and connectivity health,
wherein the predetermined function for calculating the smart building score, assigns a coefficient factor to each of the one or more categories;
the coefficient factor is determined from a comparison value with an industry average applied to each smart building score of the one or more categories; and
the smart building score for each of the one or more categories and the overall smart building score are displayed on a dashboard.

2. The system of claim 1, wherein:
the dashboard is shown on the monitor; and
the monitor allows one to see a full view of the overall smart building score and the system, and yet obtain and see details of the dynamic data for detecting and solving issues without changing the dashboard or the monitor

3. The system of claim 1, wherein:
the smart building score for each of the one or more categories is classified according to geographic region; and
the overall smart building score is classified according geographic region.

4. The system of claim 1, further comprising a look-up table of smart building scores, which provides a smart building classification of value according to a smart building score.

5. The system of claim 1, wherein:
the processor and the database are situated in a cloud; or
the dynamic data are real time data.

6. A method for developing a smart building score interface, comprising:
calculating one or more scores for each of one or more categories from a database having data from one or more sites of buildings, wherein the one or more categories include one or more of utility consumption, emissions, cyber security, and connectivity health; and
associating each score of the one or more scores for the one or more categories, with one or more symbols on a dashboard; and
wherein the one or more scores are factored with a predetermined function and combined into an overall smart building score, wherein:
the predetermined function for calculating the smart building score, assigns a coefficient factor to each of the one or more categories;
; and
the coefficient factor is determined from a comparison value with an industry average applied to each smart building score of the one or more categories.

7. The method of claim 6, further comprising deriving a score for each of one or more pillars, wherein the one or more pillars include one or more of environment, people, process, connectivity and assets.

8. The method of claim 7, further comprising activating a tab at a symbol on the dashboard associated with a pillar of the one or more pillars, to obtain at least a partial basis from which the score of the pillar is derived.

9. The method of claim 8, wherein:
a score for the environment pillar is derived from utility consumption and emissions;
a score for the people pillar is derived from health, wellness, happiness and comfort;
a score for the connectivity pillar is derived from cyber security and connectivity health;
a score for the process pillar is derived from maintenance efficiency; and
a score for the assets pillar is derived from asset health and asset efficiency.

10. The method of claim 7, comprising:
a smart building score by site for one or more sites; and
wherein each smart building score by site is derived from one or more scores including an environment score, a people score, a process score, a connectivity score and an asset score, for the respective site,
wherein the smart building score, assigns a coefficient factor to each of the one or more pillars; and
the coefficient factor is determined from a comparison value with an industry average applied to each smart building score of the one or more pillars.

11. The method of claim 10, wherein the one or more sites are labeled according to a name of a metropolitan vicinity where the one or more buildings are situated.

12. The method of claim 10, further comprising:
a dashboard that displays the environmental score, the people score, the connectivity score, the process score or the asset score in multi-place digits with score labels at the one or more scores to identify each score; and
wherein:
each of the one or more scores is situated at a geometrical symbol on the dashboard; and
a portion of the geometrical symbol has a contrast different from a remaining portion of the geometrical symbol, in which the score is represented on a percentage scale, and an amount of contrast difference represents a certain portion of the scale as a displayed value between full and no contrast where a symbol of full contrast represents one hundred percent and a symbol of no contrast represents zero percent.

13. The method of claim 10, wherein:
each geometrical symbol with a contrast has a color that is different than the colors of the other geometrical symbols with different contrasts; and
a copy of each geometrical symbol with its contrast is placed at an unoccupied space on the dashboard in a concentric fashion as grouped geometrical symbols but fitted without any geometrical symbol overlapping or covering another geometrical symbol.

14. The method of claim 13, wherein:
an overall smart building score for all sites is displayed within the grouped geometrical symbols;
a sub symbol is displayed at each geometrical symbol to indicate a direction and magnitude of a last change in the score at the respective each geometrical symbol; or
a user can monitor, evaluate or compare performance of a site or pillar relative to a counterpart across industry.

## Patentansprüche

1. Benutzerschnittstellensystem für eine Smart Building Score-Evaluierung eines oder mehrerer Gebäude, umfassend:
einen oder mehrere Sensoren, die sich an jedem Gebäude eines oder mehrerer Gebäude befinden und dynamische Daten über das eine oder die mehreren Gebäude bereitstellen;
einen Prozessor und eine Datenbank zum Empfangen und Verarbeiten der dynamischen Daten, und ausgestattet mit einem Programm, das die Tabellierung der dynamischen Daten für eine oder mehrere Kategorien des einen oder der mehreren Gebäude implementiert; und
einen Monitor, der mit dem Prozessor verbunden ist; und
wobei:
die Tabellierung Wertungspunkte für alle dynamischen Daten bestimmt und einen Smart Building Score für jede der einen oder der mehreren Kategorien berechnet und einen Gesamt-Smart Building Score auf der Grundlage eines Smart Building Score für jede der einen oder der mehreren Kategorien gemäß einer zuvor festgelegten Funktion für das eine oder die mehreren Gebäude berechnet,
wobei die eine oder die mehreren Kategorien eines oder mehrere von Energieverbrauch, Emissionen, Cybersicherheit und Konnektivitätsfunktionstüchtigkeit enthalten,
wobei die zuvor festgelegte Funktion zum Berechnen des Smart Building Score jeder der einen oder der mehreren Kategorien einen Koeffizientfaktor zuweist;
der Koeffizientfaktor anhand eines Vergleichswertes mit einem Branchendurchschnitt bestimmt wird, der auf jeden Smart Building Score der einen oder der mehreren Kategorien angewendet wird; und
der Smart Building Score für jede der einen oder der mehreren Kategorien und des Gesamt-Smart Building Score auf einem Dashboard angezeigt werden.

2. System nach Anspruch 1, wobei:
das Dashboard auf dem Monitor angezeigt wird; und
der Monitor es einer Person erlaubt, einen vollständigen Überblick über den Gesamt-Smart Building Score und das System zu sehen und dennoch Details der dynamischen Daten zum Detektieren und Lösen von Problemen zu erlangen und zu sehen, ohne das Dashboard oder den Monitor wechseln zu müssen.

3. System nach Anspruch 1, wobei:
der Smart Building Score für jede der einen oder der mehreren Kategorien nach geografischer Region klassifiziert ist; und
der Gesamt-Smart Building Score nach geografischer Region klassifiziert ist.

4. System nach Anspruch 1, ferner umfassend eine Nachschlagetabelle mit Smart Building Scores, die eine Smart Building-Klassifizierung des Wertes gemäß einem Smart Building Score bereitstellt.

5. System nach Anspruch 1, wobei:
sich der Prozessor und die Datenbank in einer Cloud befinden; oder
die dynamischen Daten Echtzeitdaten sind.

6. Verfahren zum Entwickeln einer Smart Building Score-Schnittstelle, umfassend:
Berechnen einer oder mehrerer Wertungen für jede von einer oder mehreren Kategorien anhand einer Datenbank, die mit Daten von einem oder mehreren Standorten von Gebäuden ausgestattet ist, wobei die eine oder die mehreren Kategorien eines oder mehrere von Energieverbrauch, Emissionen, Cybersicherheit und Konnektivitätsfunktionstüchtigkeit enthalten; und
Verknüpfen jeder Wertung der einen oder der mehreren Wertungen für die eine oder die mehreren Kategorien mit einem oder mehreren Symbolen auf einem Dashboard; und
wobei die eine oder die mehreren Wertungen mit einer zuvor festgelegten Funktion faktorisiert und zu einem Gesamt-Smart Building Score kombiniert werden, wobei:
die zuvor festgelegte Funktion zum Berechnen des Smart Building Score jeder der einen oder der mehreren Kategorien einen Koeffizientfaktor zuweist;
und
der Koeffizientfaktor anhand eines Vergleichswertes mit einem Branchendurchschnitt bestimmt wird, der auf jeden Smart Building Score der einen oder der mehreren Kategorien angewendet wird.

7. Verfahren nach Anspruch 6, ferner umfassend das Ableiten einer Wertung für jede von einer oder mehreren Säulen, wobei die eine oder die mehreren Säulen eines oder mehrere von Umwelt, Menschen, Prozessen, Konnektivität und Betriebsmitteln enthalten.

8. Verfahren nach Anspruch 7, ferner umfassend das Aktivieren einer Registerkarte an einem Symbol auf dem Dashboard, das mit einer Säule der einen oder der mehreren Säulen verknüpft ist, um mindestens eine teilweise Basis zu erlangen, von der aus die Wertung der Säule abgeleitet wird.

9. Verfahren nach Anspruch 8, wobei:
eine Wertung für die Säule Umwelt aus Energieverbrauch und Emissionen abgeleitet wird;
eine Wertung für die Säule Menschen aus Gesundheit, Wohlbefinden, Zufriedenheit und Komfort abgeleitet wird;
eine Wertung für die Säule Konnektivität aus Cybersicherheit und Konnektivitätsfunktionstüchtigkeit abgeleitet wird;
eine Wertung für die Säule Prozesse aus der Wartungseffizienz abgeleitet wird; und
eine Wertung für die Säule Betriebsmittel aus der Funktionstüchtigkeit und der Effizienz der Betriebsmittel abgeleitet wird.

10. Verfahren nach Anspruch 7, umfassend:
einen Smart Building Score nach Standort für einen oder mehrere Standorte; und wobei jeder Smart Building Score nach Standort aus einer oder mehreren Wertungen abgeleitet wird, die eine Umweltwertung, eine Menschenwertung, eine Prozesswertung, eine Konnektivitätswertung und eine Betriebsmittelwertung für den jeweiligen Standort enthalten,
wobei der Smart Building Score jeder der einen oder der mehreren Säulen einen Koeffizientfaktor zuweist; und
der Koeffizientfaktor anhand eines Vergleichswertes mit einem Branchendurchschnitt bestimmt wird, der auf jeden Smart Building Score der einen oder der mehreren Säulen angewendet wird.

11. Verfahren nach Anspruch 10, wobei der eine oder die mehreren Standorte gemäß einem Namen eines Ballungsraums bezeichnet werden, in dem sich das eine oder die mehreren Gebäude befinden.

12. Verfahren nach Anspruch 10, ferner umfassend:
ein Dashboard, das die Umweltwertung, die Menschenwertung, die Konnektivitätswertung, die Prozesswertung oder die Betriebsmittelwertung in mehrstelligen Zahlen mit Wertungsbezeichnungen bei der einen oder den mehreren Wertungen anzeigt, um jede Wertung zu identifizieren; und
wobei:
jede der einen oder der mehreren Wertungen sich bei einem geometrischen Symbol auf dem Dashboard befindet; und
ein Abschnitt des geometrischen Symbols einen Kontrast hat, der sich von einem übrigen Abschnitt des geometrischen Symbols unterscheidet, wobei die Wertung auf einer Prozentskala dargestellt wird und ein Betrag an Kontrastdifferenz einen gewissen Abschnitt der Skala als einen angezeigten Wert zwischen vollem und ohne Kontrast darstellt, wobei ein Symbol mit vollem Kontrast einhundert Prozent darstellt und ein Symbol ohne Kontrast null Prozent darstellt.

13. Verfahren nach Anspruch 10, wobei:
jedes geometrische Symbol mit einem Kontrast eine Farbe hat, die sich von den Farben der anderen geometrischen Symbole mit anderen Kontrasten unterscheidet; und
eine Kopie jedes geometrischen Symbols mit seinem Kontrast an einer freien Stelle auf dem Dashboard in einer konzentrischen Weise als gruppierte geometrische Symbole platziert wird, aber ohne dass ein geometrisches Symbol ein anderes geometrisches Symbol überlappt oder verdeckt.

14. Verfahren nach Anspruch 13, wobei:
ein Gesamt-Smart Building Score für alle Standorte innerhalb der gruppierten geometrischen Symbole angezeigt wird;
bei jedem geometrischen Symbol ein Untersymbol angezeigt wird, um eine Richtung und ein Ausmaß einer letzten Änderung der Wertung bei dem jeweiligen geometrischen Symbol anzuzeigen; oder
ein Benutzer die Leistung eines Standortes oder einer Säule relativ zu einem anderen Wirtschaftsteilnehmer überwachen, evaluieren oder vergleichen kann.

## Revendications

1. Système d'interface utilisateur pour une évaluation de Smart Building Score d'un ou plusieurs bâtiments, comprenant :
un ou plusieurs capteurs situés au niveau de chaque bâtiment d'un ou plusieurs bâtiments, qui fournissent des données dynamiques concernant le ou les bâtiments ;
un processeur et une base de données pour recevoir et traiter les données dynamiques, et présentant un programme qui réalise la mise en tableau des données dynamiques pour une ou plusieurs catégories du ou des bâtiments ; et
un écran connecté au processeur ; et
dans lequel :
la mise en tableau détermine des points de score pour chacune des données dynamiques et calcule un Smart Building Score pour chacune de la ou des catégories, et calcule un Smart Building Score global sur la base d'un Smart Building Score pour chacune de la ou des catégories selon une fonction prédéterminée pour le ou les bâtiments,
dans lequel la ou les catégories incluent l'un ou plusieurs des éléments suivants : la consommation d'énergie, les émissions, la cybersécurité et la santé de la connectivité,
dans lequel la fonction prédéterminée pour calculer le Smart Building Score assigne un facteur de coefficient à chacune de la ou des catégories ;
le facteur de coefficient est déterminé à partir d'une valeur de comparaison avec une moyenne d'industrie appliquée à chaque Smart Building Score de la ou des catégories ; et
le Smart Building Score pour chacune de la ou des catégories et le Smart Building Score global sont affichés sur un tableau de bord.

2. Système selon la revendication 1, dans lequel :
le tableau de bord est montré sur l'écran ; et
l'écran permet de voir une vue complète du Smart Building Score global et le système, et pourtant d'obtenir et de voir des détails des données dynamiques pour détecter et résoudre des problèmes sans changer le tableau de bord ou l'écran.

3. Système selon la revendication 1, dans lequel :
le Smart Building Score pour chacune de la ou des catégories est classé selon la région géographique ; et
le Smart Building Score global est classé selon la région géographique.

4. Système selon la revendication 1, comprenant en outre un tableau de visualisation de scores de bâtiment intelligent, qui fournit un classement de valeur de bâtiment intelligent selon un Smart Building Score.

5. Système selon la revendication 1, dans lequel :
le processeur et la base de données sont situés dans un nuage ; ou
les données dynamiques sont des données en temps réel.

6. Procédé pour développer une interface de Smart Building Score, comprenant :
le calcul d'un ou de plusieurs scores pour chacune d'une ou de plusieurs catégories à partir d'une base de données présentant des données provenant d'un ou plusieurs sites de bâtiments, dans lequel la ou les catégories incluent l'un ou plusieurs des éléments suivants : la consommation d'énergie, les émissions, la cybersécurité et la santé de la connectivité ; et
l'association de chaque score du ou des scores pour la ou les catégories à un ou plusieurs symboles sur un tableau de bord ; et
dans lequel le ou les scores sont factorisés avec une fonction prédéterminée et combinés en un Smart Building Score global, dans lequel :
la fonction prédéterminée pour calculer le Smart Building Score assigne un facteur de coefficient à chacune de la ou des catégories ;
et
le facteur de coefficient est déterminé à partir d'une valeur de comparaison avec une moyenne d'industrie appliquée à chaque Smart Building Score de la ou des catégories.

7. Procédé selon la revendication 6, comprenant en outre la dérivation d'un score pour chacun d'un ou plusieurs piliers, dans laquelle le ou les piliers incluent l'un ou plusieurs des éléments suivants : l'environnement, les personnes, les processus, la connectivité et les actifs.

8. Procédé selon la revendication 7, comprenant en outre l'activation d'un onglet au niveau d'un symbole sur le tableau de bord associé à un pilier du ou des piliers, pour obtenir au moins une base partielle à partir de laquelle le score du pilier est dérivé.

9. Procédé selon la revendication 8, dans lequel :
un score pour le pilier environnement est dérivé de la consommation d'énergie et des émissions ;
un score pour le pilier personnes est dérivé de la santé, du bien-être, du bonheur et du confort ;
un score pour le pilier connectivité est dérivé de la cybersécurité et de la santé de la connectivité ;
un score pour le pilier processus est dérivé de l'efficacité de maintenance ; et
un score pour le pilier actifs est dérivé de la santé des actifs et de l'efficacité des actifs.

10. Procédé de la revendication 7, comprenant :
un Smart Building Score par site pour un ou plusieurs sites ; et
dans lequel chaque Smart Building Score par site est dérivé d'un ou plusieurs scores incluant un score d'environnement, un score de personnes, un score de processus, un score de connectivité et un score d'actifs pour le site respectif,
dans lequel le Smart Building Score assigne un facteur de coefficient à chacun du ou des piliers ; et
le facteur de coefficient est déterminé à partir d'une valeur de comparaison avec une moyenne d'industrie appliquée à chaque Smart Building Score du ou des piliers.

11. Procédé selon la revendication 10, dans lequel le ou les sites sont étiquetés selon un nom d'un voisinage de métropole dans lequel le ou les bâtiments sont situés.

12. Procédé selon la revendication 10, comprenant en outre :
un tableau de bord qui affiche le score environnemental, le score de personnes, le score de connectivité, le score de processus ou le score d'actifs sous forme de chiffres à multiemplacement avec des étiquettes de score au niveau du ou des scores pour identifier chaque score ; et
dans lequel :
chacun du ou des scores est situé au niveau d'un symbole géométrique sur le tableau de bord ; et
une partie du symbole géométrique présente un contraste différent d'une partie restante du symbole géométrique, dans laquelle le score est représenté sur une échelle de pourcentage, et une quantité de différence de contraste représente une certaine partie de l'échelle en tant que valeur affichée entre un contraste total et nul, où un symbole de contraste total représente cent pour cent et un symbole de contraste nul représente zéro pour cent.

13. Procédé selon la revendication 10, dans lequel :
chaque symbole géométrique avec un contraste présente une couleur qui est différente des couleurs des autres symboles géométriques avec différents contrastes ; et
une copie de chaque symbole géométrique avec son contraste est placée au niveau d'un espace inoccupé sur le tableau de bord d'une manière concentrique en tant que symboles géométriques groupés mais ajustée sans aucun symbole géométrique chevauchant ou couvrant un autre symbole géométrique.

14. Procédé selon la revendication 13, dans lequel :
un Smart Building Score global pour tous les sites est affiché à l'intérieur des symboles géométriques groupés ;
un sous-symbole est affiché au niveau de chaque symbole géométrique pour indiquer une direction et une amplitude d'un dernier changement dans le score au niveau de chaque symbole géométrique respectif ; ou
un utilisateur peut surveiller, évaluer ou comparer la performance d'un site ou d'un pilier par rapport à un homologue dans l'industrie.
